# FASCICULE DE BREVET EUROPEEN

(11) **EP 1 704 346 B1**
(45) Date de publication et mention de la délivrance du brevet: **03.09.2008**
(21) Numéro de dépôt: 05717671.1
(22) Date de dépôt: 17.01.2005
(51) Int. Cl.: F16F 15/131, F16F 15/315

(54) **DOUBLE VOLANT AMORTISSEUR EN PARTICULIER POUR VEHICULE AUTOMOBILE**
INSBESONDERE FÜR EIN KRAFTFAHRZEUG BESTIMMTES ZWEIMASSENDÄMPFUNGSSCHWUNGRAD
TWIN-MASS DAMPING FLYWHEEL WHICH IS INTENDED, IN PARTICULAR, FOR A MOTOR VEHICLE

(30) Priorité: 16.01.2004 FR 0400417
(43) Date de publication de la demande: 27.09.2006
(73) Titulaire: Valeo Embrayages, 80009 Amiens Cedex 1 (FR)
(72) Inventeur: MATEUS DE JESUS, José Manuel, F-80000 Amiens (FR); BONFILIO, Ciriaco, F-92110 Clichy (FR); SATONNET, Daniel, F-80000 Amiens (FR); FENIOUX, Daniel, F-80480 Saleux (FR)
(74) Mandataire: Doressamy, Clarisse
(86) Numéro de dépôt international: PCT/FR2005/050026
(87) Numéro de publication internationale: WO 2005/073593

(56) Documents cités:
- FR-A- 2 754 034
- FR-A- 2 820 477

## Description

L'invention concerne un double volant amortisseur, en particulier pour véhicule automobile, qui comprend deux volants d'inertie coaxiaux centrés et guidés en rotation l'un par rapport à l'autre au moyen d'un palier.

L'un des volants d'inertie est fixé à un arbre moteur tel que le vilebrequin d'un moteur à combustion interne de véhicule automobile, par des vis qui sont disposées en cercle autour de l'axe des volants d'inertie.

Un amortisseur de torsion est monté entre les deux volants d'inertie et les relie en rotation. Un ou plusieurs moyens de friction sont agencés entre les volants et servent à freiner les oscillations relatives des deux volants.

Dans certaines réalisations, le palier de centrage et de guidage en rotation des volants d'inertie a un diamètre relativement faible et les vis de fixation du double volant amortisseur sur l'arbre moteur sont réparties sur un cercle autour du palier. Au moins un des moyens de friction doit alors être agencé autour du cercle des vis de fixation dans une position où son encombrement radial constitue une gêne pour le montage des composants de l'amortisseur de torsion.

La présente invention a notamment pour but d'apporter une solution simple, efficace et peu coûteuse à ce problème.

Elle propose à cet effet un double volant amortisseur, en particulier pour véhicule automobile, comprenant deux volants d'inertie coaxiaux centrés et guidés en rotation l'un par rapport à l'autre au moyen d'un palier, et des moyens de frottement montés entre les deux volants pour freiner leurs oscillations relatives, caractérisé en ce que les moyens de frottement sont intégrés au palier.

Grâce à l'invention, les inconvénients liés à l'encombrement radial des moyens de frottement sont éliminés et l'encombrement radial général du double volant amortisseur peut être réduit ou bien l'amortisseur de torsion peut avoir un encombrement radial plus important, selon ce que l'on souhaite.

Selon une autre caractéristique de l'invention, le palier précité est un roulement comprenant une bague extérieure solidaire d'un des volants et une bague intérieure solidaire de l'autre des volants, et les moyens de frottement sont montés entre les bagues du roulement.

Dans un mode de réalisation préféré de l'invention, les bagues du roulement sont prolongées axialement sur un côté au moins du roulement et les moyens de frottement sont montés entre les prolongements axiaux des bagues.

De préférence, les moyens de frottement sont séparés axialement des organes roulants du roulement par au moins une rondelle montée de façon sensiblement étanche entre les bagues du roulement.

Les moyens de frottement comprennent des moyens de serrage élastique à action axiale, ou radiale ou circonférentielle.

Dans une première forme de réalisation de l'invention, les moyens de frottement comprennent deux anneaux fendus montés entre les bagues du roulement et présentant des faces en contact dont au moins une est tronconique, et des moyens élastiques sollicitant les deux anneaux fendus l'un vers l'autre dans une direction tendant à augmenter le diamètre d'un premier des anneaux fendus et/ou à réduire le diamètre du second des anneaux fendus, le premier anneau fendu étant en appui radial sur la bague extérieure du roulement et le deuxième anneau fendu étant en appui radial sur la bague intérieure du roulement.

Ces deux anneaux fendus sont immobilisés en rotation l'un par rapport à l'autre ou bien l'un d'entre eux est immobilisé en rotation sur l'une des bagues du palier.

Les moyens élastiques sont avantageusement constitués par une rondelle élastique du type rondelle Belleville à serrage axial.

Pour cela, l'un des anneaux fendus peut comporter un rebord annulaire d'extrémité sur lequel cette rondelle élastique s'appuie pour solliciter l'autre anneau fendu vers l'autre extrémité de l'anneau fendu qui comporte le rebord annulaire d'extrémité précité, les deux anneaux fendus étant montés l'un autour de l'autre.

De préférence, les faces en contact des deux anneaux fendus sont tronconiques et conjuguées l'une de l'autre.

Dans une autre forme de réalisation, les moyens de frottement comprennent deux bagues cylindriques fendues montées l'une autour de l'autre et venant en appui radial l'une sur une bague extérieure du palier et l'autre sur la bague intérieure du palier, et des moyens élastiques disposés entre ces deux bagues cylindriques fendues et les sollicitant radialement dans le sens tendant à les écarter l'une de l'autre.

Dans cette forme de réalisation, les moyens élastiques sont avantageusement constitués par une lame annulaire cylindrique ondulée formant ressort et dont les ondulations sont en appui alternativement sur l'une et sur l'autre des bagues cylindriques des moyens de frottement.

Les surfaces cylindriques en regard de ces bagues comportent des saillies coopérant par butée circonférentielle avec les ondulations de la lame ressort.

Dans une variante de réalisation, les deux bagues cylindriques fendues des moyens de frottement sont reliées l'une à l'autre par des doigts ou voiles élastiques à configuration ondulée ou incurvée, qui sont formés d'une seule pièce avec les bagues cylindriques.

Dans une autre forme de réalisation, les moyens élastiques comprennent des ressorts circonférentiels qui sont logés dans des évidements des surfaces en regard des bagues cylindriques fendues des moyens de frottement, ces évidements comprenant à leurs extrémités des faces d'appui sur les extrémités correspondantes des ressorts.

Dans cette forme de réalisation, deux ressorts circonférentiels précités sont logés dans les évidements précités de part et d'autre des fentes des bagues cylindriques des moyens de frottement.

Dans une autre forme de réalisation, les moyens de frottement comprennent des rondelles plates juxtaposées axialement qui sont solidaires en rotation alternativement de l'une et de l'autre des bagues externe et interne du palier, et des moyens élastiques sollicitant axialement les rondelles en appui les unes sur les autres.

De préférence, ces moyens élastiques comprennent alors une rondelle élastique du type rondelle Belleville ou analogue, qui est montée en appui sur un rebord annulaire d'extrémité d'une des bagues du palier et sur une rondelle plate précitée.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- La figure 1 est une vue schématique en coupe axiale d'un double volant amortisseur selon l'invention ;
- La figure 2 est une vue partielle agrandie du roulement de ce double volant amortisseur ;
- La figure 3 est une vue en élévation de ce roulement ;
- La figure 4 est une vue schématique en coupe selon la ligne IV-IV de la figure 3 ;
- La figure 5 est une vue partielle d'une variante de réalisation du roulement du double volant amortisseur selon l'invention ;
- La figure 6 est une vue partielle en coupe transversale du roulement de la figure 5 ;
- La figure 7 est une vue schématique partielle en coupe transversale d'une variante de réalisation du roulement de la figure 5 ;
- La figure 8 est une vue schématique partielle d'une autre variante de réalisation du roulement ;
- La figure 9 est une vue schématique partielle en coupe axiale d'une autre forme de réalisation du roulement ;
- La figure 10 est une vue schématique en perspective éclatée du roulement de la figure 9 ;
- la figure 11 est une vue partielle agrandie du roulement d'une variante de réalisation de la figure 1 ;
- la figure 12 est une vue partielle agrandie du roulement d'une deuxième variante de réalisation de la figue 1 ;
- la figure 13 est une vue schématique d'une variante de réalisation de la figure 8 ;
- la figure 14 est une vue schématique en coupe axiale d'une deuxième mode de réalisation du double volant amortisseur de la figure 1, comportant une deuxième variante de réalisation de la figure 8.

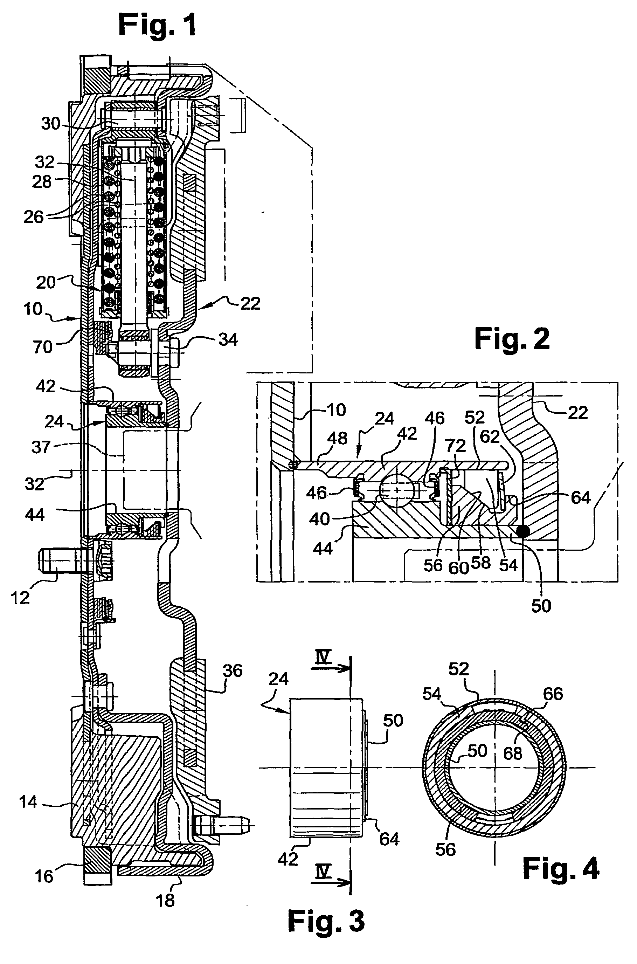

Dans le premier mode de réalisation de l'invention qui est représenté schématiquement aux figures 1 à 4, la référence 10 désigne un premier volant d'inertie ou volant primaire, qui est fixé par des vis 12 sur l'extrémité d'un arbre moteur tel que le vilebrequin d'un moteur à combustion interne de véhicule automobile, ce volant primaire 10 étant du type flexible et étant solidaire à sa périphérie externe d'une masse d'inertie 14 qui porte une couronne de démarreur 16 ainsi que l'élément d'entrée 18 d'un amortisseur de torsion 20 reliant en rotation le volant primaire 10 à un volant d'inertie secondaire 22.

Le volant secondaire 22 est centré et guidé en rotation sur le volant primaire 10 au moyen d'un palier 24 qui sera décrit plus en détail dans ce qui suit et qui est monté sur le volant primaire 10 à l'intérieur d'un cercle défini par les vis de fixation 12.

L'amortisseur de torsion 20 est ici du type radial et comprend des ressorts droits 26 qui sont orientés radialement en position de repos et qui sont logés dans des boîtes cylindriques 28 dont les extrémités radialement externes sont articulées sur l'élément d'entrée 18 autour d'axes 30 qui sont parallèles à l'axe commun 32 des volants d'inertie. Les ressorts 26 logés dans les boîtes 28 sont comprimés radialement par les extrémités radialement externes de tiges cylindriques 32 qui sont engagées dans les ressorts 26 et dont les extrémités radialement internes sont montées à rotation sur le volant secondaire 22 autour d'axes 34 parallèles aux axes 30 et 32 précités.

Le volant secondaire 22 porte en périphérie une masse annulaire 36 qui forme le plateau de réaction d'un embrayage (non représenté) de transmission d'un couple moteur à un arbre mené, tel que l'arbre d'entrée d'une boîte de vitesses, l'extrémité de cet arbre d'entrée 37 étant représentée en trait fantôme en figure 1 et étant partiellement engagée à l'intérieur du palier 24.

Comme on le voit mieux en figure 2, le palier 24 est un roulement comprenant des billes 40 montées entre une bague cylindrique extérieure 42 et une bague cylindrique intérieure 44 dont les surfaces en regard définissent un chemin de roulement des billes 40.

De façon classique, des fiasques annulaires 46 sont montés entre les bagues 42, 44 de part et d'autre des billes 40 et du chemin de roulement pour éviter l'entrée de corps étrangers dans le chemin de roulement et pour contenir la graisse logée entre ces flasques.

Les bagues 42, 44 du roulement sont prolongées axialement chacune d'un côté du roulement, la bague extérieure 42 comprenant un prolongement axial 48 qui s'étend jusqu'au volant primaire 10 et permet la fixation de cette bague par exemple par soudure sur le volant primaire, la bague intérieure 44 comprenant un prolongement axial 50 qui s'étend jusqu'au volant secondaire 22 pour fixation de cette bague sur le volant secondaire par soudure ou par un autre moyen approprié.

Dans l'exemple de réalisation des figures 1 à 4, la bague extérieure 42 du roulement comprend un prolongement axial 52 en direction du volant secondaire 22 et délimite avec le prolongement axial 50 de la bague intérieure 44 un logement dans lequel sont montés des moyens de frottement permettant de freiner les oscillations relatives des deux volants d'inertie.

Ces moyens de frottement comprennent deux anneaux fendus 54 et 56, qui sont ici montés l'un autour de l'autre, l'anneau extérieur 54 ayant une face cylindrique extérieure en appui sur le prolongement 52 de la bague extérieure 42 du roulement 24, l'anneau intérieur 56 ayant une face cylindrique interne en appui sur le prolongement axial 50 de la bague intérieure 44 du roulement 24 et les deux anneaux 54 et 56 étant en appui l'un sur l'autre par des faces tronconiques 58, 60 qui sont conjuguées l'une de l'autre et qui sont inclinées à environ 45° sur l'axe de rotation 32 dans l'exemple représenté.

Une rondelle élastique 62 du type Belleville formant ressort est montée en appui sur une face radiale de l'anneau extérieur 54 et sur un rebord annulaire 64 d'extrémité de l'anneau intérieur 56 pour solliciter axialement les deux anneaux l'un par rapport à l'autre dans des directions tendant à faire augmenter le diamètre de l'anneau extérieur 54 et à réduire le diamètre intérieur de l'anneau intérieur 56. Cette rondelle élastique 62 a donc pour effet d'appliquer les anneaux 54 et 56 sur les prolongements 52, 50 de la bague extérieure 42 et de la bague intérieure 44 du roulement 24, respectivement, pour générer un frottement sur ces bagues 42 et 44 qui freine une rotation relative entre ces bagues et donc entre les volants primaire et secondaire dont ces bagues sont solidaires.

Les anneaux fendus 54 et 56 sont solidaires en rotation l'un de l'autre, par exemple au moyen d'une dent ou nervure 66 formée sur la surface interne de l'anneau extérieur 54 et engagée dans une encoche ou une rainure correspondante 68 de la surface extérieure de l'anneau intérieur 56, comme représenté en figure 4. En variante, l'anneau interne 56 peut être solidarisé en rotation avec la bague intérieure 44 du roulement.

En fonctionnement, le volant primaire 10 est entraîné en rotation par l'arbre moteur sur lequel il est fixé et entraîne lui-même en rotation le volant secondaire 22 par l'intermédiaire de l'amortisseur de torsion 20.

Toute oscillation relative entre les volant d'inertie 10 et 22 se traduit par une rotation relative des bagues 42 et 44 du roulement et donc par un frottement des anneaux fendus 54 et 56 sur ces bagues du roulement, ce frottement absorbant une partie de l'énergie de l'oscillation relative entre les volants d'inertie. C'est la force axiale développée par la rondelle élastique 62 qui détermine la quantité d'énergie absorbée par ce frottement. L'angle des faces tronconiques 58, 60 des anneaux fendus permet aussi de régler la force de frottement.

Les moyens de frottement 54, 56 intégrés au roulement 24 servent surtout à amortir les vibrations et oscillations relatives des volants d'inertie au régime de ralenti et aux faibles charges du moteur.

Quand le couple transmis est plus important, les vibrations et oscillations relatives des deux volants sont amorties par des moyens de frottement 70 représentés schématiquement en figure 1, qui font partie de l'amortisseur de torsion 20.

Enfin, pour éviter toute fuite de lubrifiant ou de graisse du chemin de roulement vers les anneaux fendus 54, 56, une rondelle supplémentaire de séparation 72 peut être montée entre les prolongements axiaux 50 et 52 des bagues du roulement comme représenté en figure 2, cette rondelle 72 pouvant également servir de butée axiale à l'anneau fendu intérieur 56.

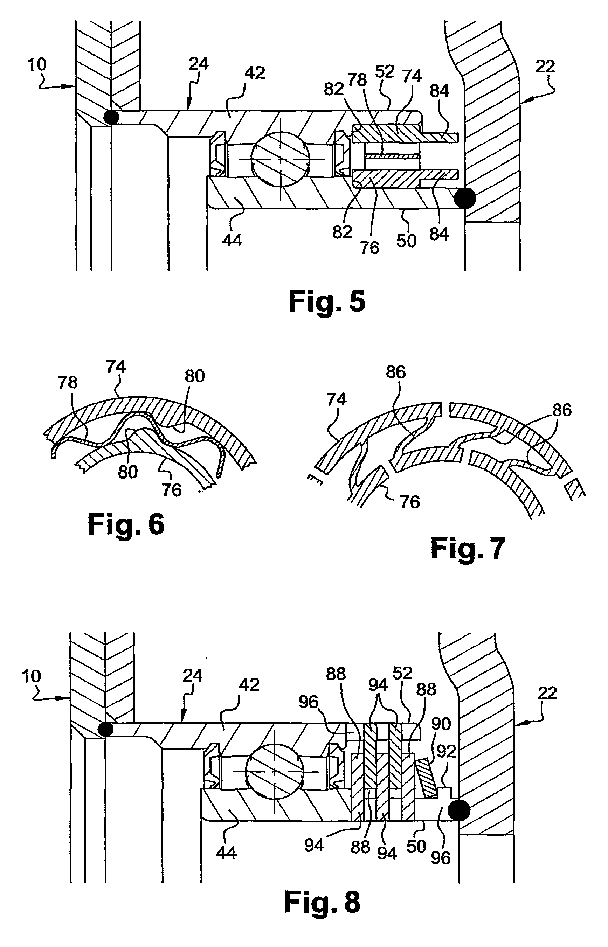

Une autre forme de réalisation de l'invention a été représentée schématiquement aux figures 5 et 6.

Dans ces figures, les moyens de frottement logés entre les prolongements 50 et 52 des bagues du roulement 24 comprennent deux bagues cylindriques fendues 74, 76 montées l'une autour de l'autre, et un élément élastique 78 monté entre les deux bagues fendues 74 et 76, cet élément élastique 78 étant par exemple formé d'une lame annulaire ondulée 78 comme on le voit mieux en figure 6.

Des saillies 80 sont formées sur les surfaces cylindriques en regard des deux bagues 74 et 76 et coopèrent avec les ondulations de l'élément élastique 78 pour interdire ou limiter une rotation relative entre ces deux bagues fendues, et les ondulations de l'élément élastique 78 sont en appui alternativement sur la surface cylindrique interne de la bague extérieure 74 qui est poussée radialement sur le prolongement axial 52 de la bague externe du roulement 24 et sur la surface cylindrique externe de la bague interne 76, qui est appliquée radialement sur le prolongement axial 50 de la bague interne 44 du roulement 24.

Les bagues 74 et 76 peuvent être calées axialement entre les bagues 42 et 44 du roulement 24, du côté du volant primaire 10, par appui sur des épaulements 82 des surfaces cylindriques en regard des bagues 42 et 44 du roulement. Du côté du volant secondaire 22, les bagues cylindriques fendues 74 et 76 peuvent comporter des doigts 84 s'étendant axialement vers le volant secondaire 22 et se terminant à faible distance de ce dernier.

Le fonctionnement est identique à celui qui a été décrit pour le mode de réalisation des figures 1 à 4, la seule différence étant que les moyens élastiques 78 développent un effort radial d'appui des bagues 74 et 76 sur les bagues extérieure 42 et intérieure 44 du roulement 24.

Dans la variante de réalisation représentée schématiquement en figure 7, les bagues 74 et 76 sont réunies par des voiles élastiques 86 incurvés ou ondulés qui les sollicitent radialement dans des directions opposées lorsque ces bagues 74 et 76 sont montées entre les prolongements axiaux 50 et 52 des bagues du roulement 24. Dans ce cas, au moins une des bagues 74, 76 et les voiles élastiques 86 peuvent être formés d'une seule pièce, par exemple par moulage de matière plastique.

Dans la forme de réalisation représentée schématiquement en figure 8, les moyens de frottement intégrés au roulement 24 sont constitués par des rondelles de frottement 88 qui sont empilées axialement les unes sur les autres et qui sont alternativement solidaires en rotation de la bague interne 44 du roulement et de la bague externe 42 de ce roulement, et qui sont sollicitées axialement en appui les unes sur les autres et sur un épaulement d'une des bagues 42, 44 du roulement par une rondelle élastique 90 qui prend appui d'une part sur un rebord annulaire 92 formé à l'extrémité d'un prolongement axial 50 ou 52 d'une des bagues du roulement et d'autre part sur les rondelles empilées 88.

Pour être solidarisées en rotation des bagues 42 et 44 du roulement 24, les rondelles de frottement 88 comprennent par exemple, à leur périphéries interne ou externe, respectivement, des dents 94 engagées dans des rainures ou fentes axiales 96 des prolongements 50 et 52 des bagues du roulement.

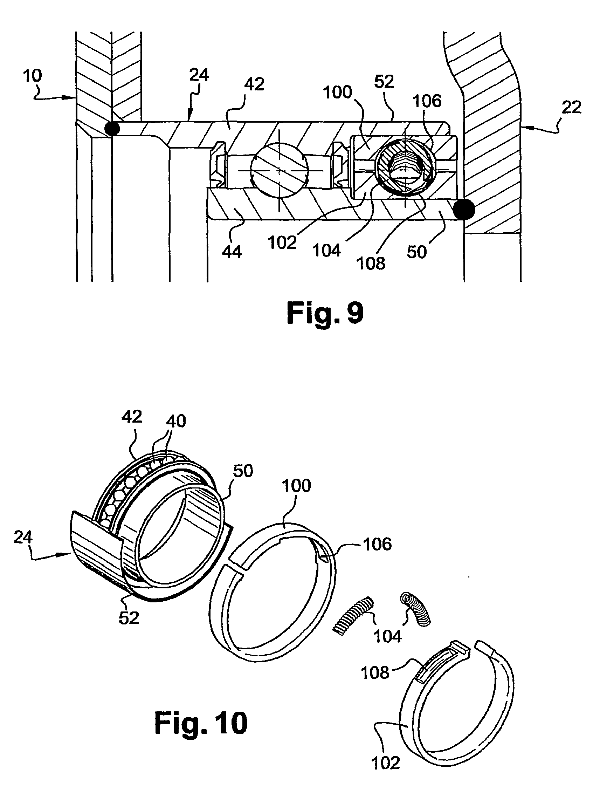

Dans la forme de réalisation des figures 9 et 10, les moyens de frottement comprennent deux bagues cylindriques fendues 100, 102 montées l'une autour de l'autre entre les prolongements axiaux 50 et 52 des bagues du roulement 24, et des moyens élastiques 104 qui relient ces deux bagues en rotation et qui les sollicitent circonférentiellement en appui sur les prolongements 52 et 50 respectivement des bagues 42 et 44 du roulement.

Les moyens élastiques 104 sont ici formés de deux ressorts à spires qui sont disposés circonférentiellement et qui sont reçus dans des logements formés par des évidements semi-cylindriques 106, 108 des surfaces en regard des bagues 100, 102.

Les ressorts 104 sont en appui à leurs extrémités sur les fonds des logements 106, 108 et ils sont précontraints dans ces logements.

Il sont de plus situés de part et d'autre des fentes des bagues 100 et 102, de façon à ce que les efforts circonférentiels exercés par les ressorts 104 sur les bagues 100, 102 tendent à appliquer ces bagues radialement sur la surface cylindrique interne du prolongement axial 52 de la bague externe 42 du roulement 24 et sur la surface cylindrique externe du prolongement axial 50 de la bague intérieure 44 du roulement 24, respectivement.

Le fonctionnement de ces moyens de frottement est identique à celui déjà décrit en référence aux autres figures.

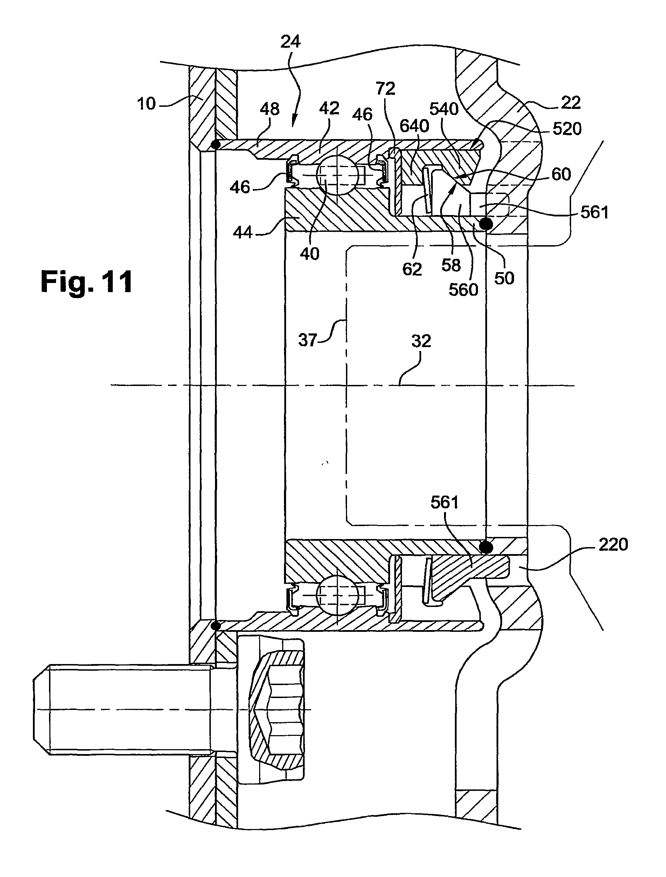

En figure 11, est illustrée une variante de réalisation du premier mode de réalisation. Cette variante se différencie du premier mode de réalisation par l'agencement entre les anneaux fendus 540, 560 et la rondelle élastique 62 formant ressort. Comme pour le premier mode de réalisation, les deux anneaux fendus 540, 560 sont, ici, montés l'un autour de l'autre : l'anneau extérieur 540 a une face cylindrique externe 520 en appui sur le prolongement de la bague extérieure 42 du roulement 24, l'anneau intérieur 560 a une face interne en appui sur le prolongement axiale 50 de la bague intérieure 44 du roulement 24. Les deux anneaux 540, 560 sont en appui l'un sur l'autre par des faces tronconiques 58, 60 conjuguées l'une de l'autre et inclinées à environs 45° sur l'axe de rotation 32. La rondelle élastique 62 est montée en appui sur une face radiale de l'anneau intérieur 560 et sur le rebord annulaire 640 d'extrémité de l'anneau extérieur 540 afin de solliciter axialement les deux anneaux fendus l'un par rapport à l'autre de manière similaire au premier mode de réalisation. Cet agencement permet d'obtenir une face externe 520 de grande surface de frottement située sur un grand rayon ce qui permet un frottement meilleur en efficacité.

D'autre part, l'anneau intérieur 560 présente au moins un prolongement axial 561 apte à être reçu dans un orifice 220 aménagé dans le volant secondaire 22 afin d'être entraîné en rotation par le volant secondaire 22, lors d'un fonctionnement du double volant.

En sous variante, les deux anneaux fendus sont solidaires en rotation l'un de l'autre de manière similaire au premier mode de réalisation.

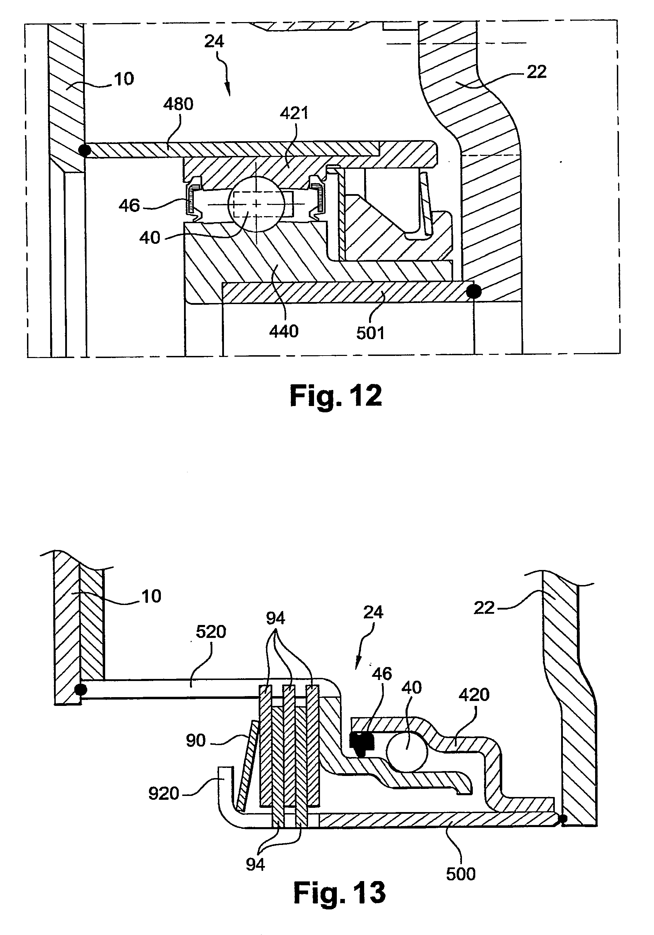

La figure 12 illustre une deuxième variante de réalisation du premier mode de réalisation de l'invention. Cette deuxième variante se différencie du premier mode de réalisation au niveau du montage du roulement 24 entre les deux volants primaire 10 et secondaire 22. Sur le volant primaire 10, est soudée une première tôle cylindrique sensiblement de révolution 480 au niveau de l'une de ses extrémités. Au niveau de l'extrémité libre de la tôle cylindrique 480, est emmanchée la bague extérieure 421 du roulement 24. Cette dernière peut présenter un décrochement apte à recevoir l'extrémité libre de la tôle cylindrique 480 lors de l'emmanchement, comme cela est illustré sur la figure 12.

De manière similaire, une deuxième tôle cylindrique sensiblement de révolution 501 est soudée à l'une de ses extrémités sur le volant secondaire 22. Au niveau de l'extrémité libre de la tôle cylindrique 501, est emmanchée la bague intérieure 440 du roulement 24. Cette dernière peut présenter, elle aussi, un décrochement apte à recevoir l'extrémité libre de la tôle cylindrique 501, lors de l'emmanchement.

Une fois l'ensemble monté comme cela est illustré à la figure 12, le roulement 24 est pris en sandwich entre les tôles cylindriques 480, 501. Cette variante permet de ne pas avoir à souder directement le roulement 24 sur les volants primaire et secondaire respectivement, tout en ayant un ensemble roulement plus moyens de frottement solidaire et unitaire. Ceci permet de simplifier l'assemblage du double volant selon l'invention.

A la figure 13, est illustrée une variante de réalisation de la forme de réalisation représentée à la figure 8 décrite précédemment. Dans cette variante de réalisation de l'invention, le roulement 24 est de type « tôle » : les bagues intérieure 520 et extérieure 420 sont réalisée à partir d'une tôle mise en forme.

La bague est soudée au volant primaire 10 au niveau d'un prolongement axial qu'elle présente. Ici, ce prolongement axial présente un diamètre sensiblement supérieur à un diamètre de la bague supérieure 420 en tôle.

Cette bague supérieure en tôle 420 comporte un prolongement axial dont un diamètre est sensiblement inférieur au diamètre de la bague inférieure 520.

Une tôle cylindrique sensiblement de révolution 500 est soudée à l'une de ses extrémité au volant secondaire 22. La tôle cylindrique 500 est apte à recevoir, par emmanchement axial, le prolongement axial de la bague supérieure 420 en tôle du roulement 24, lors d'un montage du double volant selon l'invention. La tôle cylindrique 500 se prolonge axialement en direction du volant primaire 10 pour s'étendre, au niveau de son extrémité libre, en regard du prolongement de la bague inférieure 520, puis se termine par un rebord annulaire 920 s'étendant en saillie de manière radiale vers ledit prolongement de la bague inférieure 520.

Entre la tôle cylindrique et ledit prolongement de la bague inférieure 520, sont empilées axialement des rondelles de frottement comportant, ici, à leur périphérie interne et externe, alternativement, des dents 94 engagées dans des rainures ou fentes axiales de la tôle cylindrique et dudit prolongement de la bague inférieure 520 afin d'être solidarisées en rotation de manière similaire au mode de réalisation de la figure 8. Une rondelle élastique 90 prenant appui d'une part sur le rebord annulaire 920 et, d'autre part, sur les rondelles de frottement, sollicite ces dernières axialement en appui les uns sur les autres et sur un épaulement de la bague inférieure 520 portant ledit prolongement.

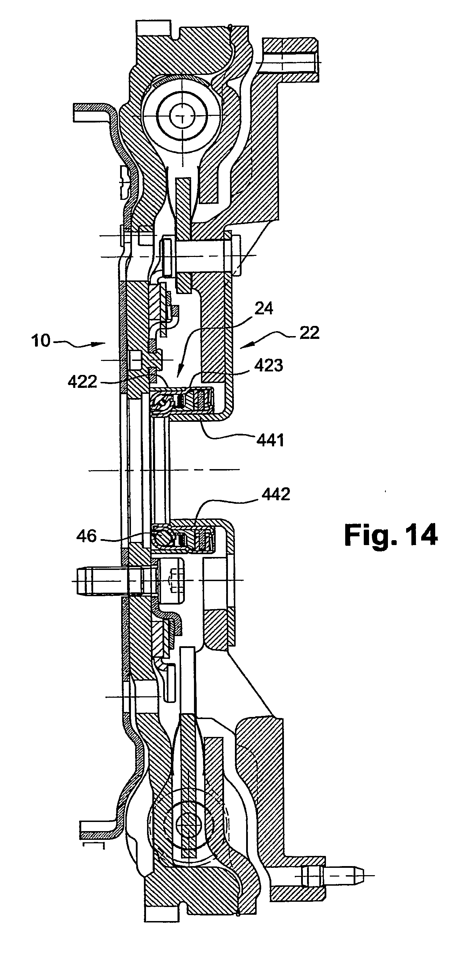

En référence à la figure 14, une deuxième variante de réalisation du mode de réalisation de l'invention de la figure 8 comporte un roulement 24 de type tôle comportant une bague supérieure en tôle 423, et une bague inférieure en tôle 442 entre lesquelles sont positionnés l'ensembles des billes 46 et les moyens de frottement identiques au mode de réalisation de la figure 8 et de la première variante de la figure 13. Similairement à la deuxième variante du premier mode de réalisation de l'invention de la figure 12, les volants primaire 10 et secondaire 22 comportent, chacun, une tôle cylindrique sensiblement de révolution 422 et 441 respectivement, soudées et/ou rivetées dans lesquelles est emmanché, lors d'un montage du double volant, le roulement 24.

Il est à noter que dans cette variante de réalisation de la figure 14, le double volant est un double volant ayant des ressorts positionnés de manière circonférentielle entre les deux volants primaire et secondaire.

L'invention est applicable à tout type de double volant amortisseur, en particulier à ceux à amortisseur de torsion à ressorts radiaux et à ceux à amortisseur de torsion à ressorts circonférentiels.

## Revendications

1. Double volant amortisseur, en particulier pour véhicule automobile, comprenant deux volants d'inertie coaxiaux (10, 22) centrés et guidés en rotation l'un par rapport à l'autre au moyen d'un palier (24), et des moyens de frottement montés entre les deux volants pour freiner leurs oscillations relatives, **caractérisé en ce que** les moyens de frottement (54, 66, 62, 74, 76, 78, 88, 90, 100, 102, 104) sont intégrés au palier (24).

2. Double volant amortisseur selon la revendication 1, **caractérisé en ce que** le palier (24) est un roulement comprenant une bague extérieure (42) solidaire de l'un des volants et une bague intérieure (44) solidaire de l'autre des volants, et **en ce que** les moyens de frottement précités sont montés entre les bagues (42, 44) du roulement.

3. Double volant amortisseur selon la revendication 2, **caractérisé en ce que** les bagues (42, 44) du roulement sont prolongées axialement sur un côté au moins du roulement et **en ce que** les moyens de frottement précités sont montés entre les prolongements axiaux (50, 52) des bagues du roulement.

4. Double volant amortisseur selon la revendication 2 ou 3, **caractérisé en ce que** les moyens de frottement (54, 56) sont séparés axialement des organes roulants (40) du roulement par au moins une rondelle (72) montée de façon sensiblement étanche entre les bagues du roulement.

5. Double volant amortisseur selon l'une des revendications précédentes, **caractérisé en ce qu'**au moins une bague (42, 44) du roulement est soudée à l'une de ses extrémités axiales sur un volant d'inertie (10, 22).

6. Double volant amortisseur selon l'une des revendications 1 à 5, **caractérisé en ce que** les moyens de frottement comprennent un moyen de serrage élastique (62) à action axiale.

7. Double volant amortisseur selon l'une des revendications précédentes, **caractérisé en ce que** les moyens de friction comprennent deux anneaux fendus (54, 56) montés entre les bagues du roulement et présentant des faces en contact (58, 60) dont au moins l'une est tronconique, et des moyens élastiques sollicitant les deux anneaux l'un vers l'autre dans une direction tendant à augmenter le diamètre d'un premier (54) des anneaux fendus et/ou à réduire le diamètre du second (56) de ces anneaux, le premier anneau fendu (54) étant en appui radial sur la bague extérieure du roulement et le second anneau fendu (56) étant en appui radial sur la bague intérieure du roulement.

8. Double volant amortisseur selon la revendication 7, **caractérisé en ce que** les deux anneaux fendus (54, 56) sont immobilisés en rotation l'un par rapport à l'autre ou l'un des anneaux fendus est immobilisé en rotation par rapport à l'une des bagues (42, 44) du palier.

9. Double volant amortisseur selon la revendication 7 ou 8, **caractérisé en ce que** les moyens élastiques comprennent une rondelle élastique (62) qui prend appui sur l'un et sur l'autre de ces anneaux fendus.

10. Double volant amortisseur selon l'une des revendications 7 à 9, **caractérisé en ce que** l'un (56) des anneaux fendus comporte un rebord annulaire d'extrémité (64) sur lequel les moyens élastiques (62) s'appuient pour solliciter l'autre anneau fendu (54) vers l'autre extrémité de l'anneau fendu (56) comportant ledit rebord annulaire d'extrémité (64).

11. Double volant amortisseur selon l'une des revendications 7 à 10, **caractérisé en ce que** les faces en contact (58, 60) des deux anneaux fendus sont tronconiques et conjuguées l'une de l'autre.

12. Double volant amortisseur selon l'une des revendications 1 à 5, **caractérisé en ce que** les moyens de frottement comprennent un moyen de serrage (78) à action radiale.

13. Double volant amortisseur selon la revendication 12, **caractérisé en ce que** les moyens de frottement comprennent deux bagues cylindriques fendues (74, 76) montées l'une autour de l'autre et venant en appui radial l'une sur une bague extérieure (42) du palier et l'autre sur la bague intérieure (44) du palier, et des moyens élastiques (78) reliant ces deux bagues cylindriques et les sollicitant radialement dans le sens tendant à les écarter l'une de l'autre.

14. Double volant amortisseur selon la revendication 13, **caractérisé en ce que** les moyens élastiques comprennent une lame annulaire cylindrique ondulée (78) formant ressort et dont les ondulations sont en appui alternativement sur l'une et sur l'autre des bagues cylindriques (74, 76) des moyens de frottement.

15. Double volant amortisseur selon la revendication 14, **caractérisé en ce que** les surfaces cylindriques en regard des bagues (74, 76) des moyens de frottement comprennent des saillies (80) coopérant par butée circonférentielle avec les ondulations de la lame de ressort (78).

16. Double volant amortisseur selon la revendication 13, **caractérisé en ce que** les deux bagues cylindriques (74, 76) des moyens de frottement sont reliées l'une à l'autre par des doigts ou des voiles élastiques (86) à configuration ondulée ou incurvée, formés d'une seule pièce avec au moins une des bagues (74, 76).

17. Double volant amortisseur selon l'une des revendications 1 à 5, **caractérisé en ce que** les moyens de frottement comprennent des moyens de serrage élastique (104) à action circonférentielle.

18. Double volant amortisseur selon la revendication 17, **caractérisé en ce que** les moyens de serrage élastique comprennent des ressorts circonférentiels (104) logés dans des évidements (106, 108) des surfaces en regard de deux bagues cylindriques (100, 102) fendues montées l'une autour de l'autre entre les bagues (42, 44) du palier, ces évidements comprenant à leurs extrémités des faces d'appui sur les extrémités correspondantes des ressorts (104).

19. Double volant amortisseur selon la revendication 18, **caractérisé en ce qu'**il comprend deux ressorts circonférentiels (104) précités logés de part et d'autre des fentes desdites bagues fendues (100, 102).

20. Double volant amortisseur selon l'une des revendications 1 à 6, **caractérisé en ce que** les moyens de frottement comprennent des rondelles plates (88) empilées axialement, qui sont solidaires en rotation alternativement de l'une et de l'autre des bagues extérieure (42) et intérieure (44) du palier, et des moyens élastiques (90) sollicitant axialement les rondelles en appui les unes sur les autres.

21. Double volant amortisseur selon la revendication 20, **caractérisé en ce que** les moyens élastiques comprennent une rondelle élastique (90) du type rondelle Belleville ou analogue, montée en appui sur un rebord annulaire (92) d'extrémité d'une des bagues du palier et sur une rondelle plate (88) précitée.

## Claims

1. Double damping wheel, in particular for a motor vehicle, comprising two coaxial inertia wheels (10, 22) which are centred and guided in rotation relative to one another by means of a bearing (24), and friction means which are fitted between the two wheels in order to brake their relative oscillations, **characterised in that** the friction means (54, 66, 62, 74, 76, 78, 88, 90, 100, 102, 104) are integrated in the bearing (24).

2. Double damping wheel according to claim 1, **characterised in that** the bearing (24) is a bearing comprising an outer ring (42) which is integral with one of the wheels and an inner ring (44) which is integral with the other one of the wheels, and **in that** the aforementioned friction means are fitted between the rings (42, 44) of the bearing.

3. Double damping wheel according to claim 2, **characterised in that** the rings (42, 44) of the bearing are extended axially on one side of the bearing at least, and **in that** the aforementioned friction means are fitted between the axial extensions (50, 52) of the rings of the bearing.

4. Double damping wheel according to claim 2 or 3, **characterised in that** the friction means (54, 56) are separated axially from the rolling units (40) of the bearing by at least one washer (72) which is fitted in a substantially sealed manner between the rings of the bearing.

5. Double damping wheel according to one of the preceding claims, **characterised in that** at least one ring (42, 44) of the bearing is welded at one of its axial ends to an inertia wheel (10, 22).

6. Double damping wheel according to one of claims 1 to 5, **characterised in that** the friction means comprise a resilient clamping means (62) with axial action.

7. Double damping wheel according to one of the preceding claims, **characterised in that** the friction means comprise two split rings (54, 56) which are fitted between the rings of the bearing and have surfaces in contact (58, 60), at least one of which is frusto-conical, and resilient means which thrust the two rings towards one another in a direction which tends to increase the diameter of a first one (54) of the split rings, and/or to reduce the diameter of the second one (56) of these rings, the first split ring (54) being supported radially on the outer ring of the bearing, and the second split ring (56) being supported radially on the inner ring of the bearing.

8. Double damping wheel according to claim 7, **characterised in that** the two split rings (54, 56) are immobilised in rotation relative to one another, or one of the split rings is immobilised in rotation relative to one of the rings (42, 44) of the bearing.

9. Double damping wheel according to claim 7 or 8, **characterised in that** the resilient means comprise a resilient washer (62) which is supported on one and the other of these split rings.

10. Double damping wheel according to one of claims 7 to 9, **characterised in that** one (56) of the split rings comprises an end annular edge (64) on which the resilient means (62) are supported, in order to thrust the other split ring (54) towards the other end of the split ring (56) comprising the said end annular edge (64).

11. Double damping wheel according to one of claim 7 to 10, **characterised in that** the surfaces in contact (58, 60) of the two split rings are frusto-conical and connected to one another.

12. Double damping wheel according to one of claims 1 to 5, **characterised in that** the friction means comprise a clamping means (78) with radial action.

13. Double damping wheel according to claim 12, **characterised in that** the friction means comprise two cylindrical split rings (74, 76) which are fitted one around the other, and are supported, one of them on an outer ring (42) of the bearing and the other on the inner ring (44) of the bearing, and resilient means (78) connecting these two cylindrical rings and thrusting them radially in the direction which tends to space them from one another.

14. Double damping wheel according to claim 13, **characterised in that** the resilient means comprise an undulating cylindrical annular sheet (78) which forms a spring, and the undulations of which are supported alternately on one and the other of the cylindrical rings (74, 76) of the friction means.

15. Double damping wheel according to claim 14, **characterised in that** the opposite cylindrical surfaces (74, 76) of the friction means comprise projections (80) which co-operate by means of circumferential abutment with the undulations of the spring sheet (78).

16. Double damping wheel according to claim 13, **characterised in that** the two cylindrical rings (74, 76) of the friction means are connected to one another by resilient deformations or fingers (86) with an undulating or curved configuration formed in a single piece with at least one of the rings (74, 76).

17. Double damping wheel according to one of claims 1 to 5, **characterised in that** the friction means comprise resilient clamping means (104) with circumferential action.

18. Double damping wheel according to claim 17, **characterised in that** the resilient clamping means comprise circumferential springs (104) which are accommodated in recesses (106, 108) in the opposite surfaces of two cylindrical split rings (100, 102) which are fitted one around the other between the rings (42, 44) of the bearing, these recesses comprising at their ends support surfaces on the corresponding ends of the springs (104).

19. Double damping wheel according to claim 18, **characterised in that** it comprises two aforementioned circumferential springs (104) which are accommodated on both sides of the slots of the said split rings (100, 102).

20. Double damping wheel according to one of claims 1 to 6, **characterised in that** the friction means comprise flat washers (88) which are stacked axially and are integral in rotation alternately with one and the other of the outer (42) and inner (44) rings of the bearing, and resilient means (90) which thrust the washers axially so as to be supported against one another.

21. Double damping wheel according to claim 20, **characterised in that** the resilient means comprise a resilient washer (90) of the Belleville washer type or the like, fitted so as to be supported on an end annular edge (92) of one of the rings of the bearing and on an aforementioned flat washer (88).

## Patentansprüche

1. Zweimassendämpfungsschwungrad, insbesondere für Kraftfahrzeuge, umfassend zwei koaxiale Schwungräder (10, 22), die durch ein Lager (24) relativ zueinander zentriert und rotatorisch geführt sind, sowie Reibungsmittel, welche zwischen die zwei Schwungräder montiert sind, um ihre Relativschwingungen zu bremsen, **dadurch gekennzeichnet, dass** die Reibungsmittel (54, 66, 62, 74, 76, 78, 88, 90, 100, 102, 104) in das Lager 24 integriert sind.

2. Zweimassendämpfungsschwungrad nach Anspruch 1, **dadurch gekennzeichnet, dass** das Lager (24) ein Wälzlager ist, welches einen fest mit einem der Schwungräder verbundenen Außenring (42) und einen fest mit dem anderen Schwungrad verbundenen Innenring (44) umfasst, und dass die vorgenannten Reibungsmittel zwischen den Ringen (42, 44) des Wälzlagers montiert sind.

3. Zweimassendämpfungsschwungrad nach Anspruch 2, **dadurch gekennzeichnet, dass** die Ringe (42, 44) des Wälzlagers auf mindestens einer Seite des Lagers axial verlängert sind, und dass die vorgenannten Reibungsmittel zwischen den axialen Verlängerungen (50, 52) der Wälzlagerringe montiert sind.

4. Zweimassendämpfungsschwungrad nach Anspruch 2 oder 3, **dadurch gekennzeichnet, dass** die Reibungsmittel (54, 56) axial von den Wälzkörpern (40) des Wälzlagers durch mindestens eine Scheibe (72) getrennt sind, welche in etwa dicht zwischen den Wälzlagerringen montiert ist.

5. Zweimassendämpfungsschwungrad nach einem der vorherigen Ansprüche, **dadurch gekennzeichnet, dass** mindestens ein Ring (42, 44) des Wälzlagers an einem seiner axialen Enden an ein Schwungrad (10, 22) angeschweißt ist.

6. Zweimassendämpfungsschwungrad nach einem der Ansprüche 1 bis 5, **dadurch gekennzeichnet, dass** die Reibungsmittel ein axial wirkendes elastisches Einspannmittel (62) umfassen.

7. Zweimassendämpfungsschwungrad nach einem der vorherigen Ansprüche, **dadurch gekennzeichnet, dass** die Reibungsmittel zwei geschlitzte Ringe (54, 56) umfassen, welche zwischen die Wälzlagerringe montiert sind und einander kontaktierende Oberflächen (58, 60) aufweisen, von denen mindestens eine kegelstumpfförmig ausgebildet ist, und dass elastische Mittel die beiden Ringe in einer Richtung gegeneinander beaufschlagen, in der der Durchmesser eines ersten (54) der geschlitzten Ringe vergrößert wird und/oder der Durchmesser des zweiten (56) dieser Ringe verringert wird, wobei der erste geschlitzte Ring (54) in radialer Anlage auf dem Außenring des Wälzlagers und der zweite geschlitzte Ring (56) in radialer Anlage auf dem Innenring des Wälzlagers ist.

8. Zweimassendämpfungsschwungrad nach Anspruch 7, **dadurch gekennzeichnet, dass** die beiden geschlitzten Ringe (54, 56) drehfest zueinander oder einer der geschlitzten Ringe drehfest zu einem der Lagerringe (42, 44) festgelegt ist.

9. Zweimassendämpfungsschwungrad nach Anspruch 7 oder 8, **dadurch gekennzeichnet, dass** die elastischen Mittel eine elastische Scheibe (62) umfassen, welche auf dem einen und dem anderen der geschlitzten Ringe aufliegt.

10. Zweimassendämpfungsschwungrad nach einem der Ansprüche 7 bis 9, **dadurch gekennzeichnet, dass** einer (56) der geschlitzten Ringe einen ringförmigen Endrand (64) umfasst, auf dem die elastischen Mittel (62) aufliegen, um den anderen geschlitzten Ring (54) gegen das andere Ende des geschlitzten Rings (56), welcher den ringförmigen Endrand (64) trägt, zu beaufschlagen.

11. Zweimassendämpfungsschwungrad nach einem der Ansprüche 7 bis 10, **dadurch gekennzeichnet, dass** die sich kontaktierenden Oberflächen (58, 60) der beiden geschlitzten Ringe kegelstumpfförmig und miteinander vereinigt sind.

12. Zweimassendämpfungsschwungrad nach einem der Ansprüche 1 bis 5, **dadurch gekennzeichnet, dass** die Reibungsmittel ein radial wirksames Einspannmittel (78) umfassen.

13. Zweimassendämpfungsschwungrad nach Anspruch 12, **dadurch gekennzeichnet, dass** die Reibungsmittel zwei geschlitzte zylindrischen Ringe (74, 76) umfassen, die sich gegenseitig umgeben und von denen einer radial auf einem Außenring (42) des Lagers und der andere auf dem Innenring (44) des Lagers aufliegt, und dass elastische Mittel (78) diese beiden zylindrischen Ringe miteinander verbinden und sie radial in einem Sinn beaufschlagen, in dem sie sich voneinander entfernen.

14. Zweimassendämpfungsschwungrad nach Anspruch 13, **dadurch gekennzeichnet, dass** die elastischen Mittel eine gewellte zylindrische Ringklinge (78) umfassen, die eine Feder bildet und deren Wellen abwechselnd auf dem einen und dem anderen der zylindrischen Ringe (74, 76) der Reibmittel aufliegen.

15. Zweimassendämpfungsschwungrad nach Anspruch 14, **dadurch gekennzeichnet, dass** die den Ringen (74, 76) der Reibmittel zugewandten zylindrischen Flächen Vorsprünge (80) umfassen, die als umfangsmäßige Anschläge mit den Wellen der Federklinge (78) zusammenwirken.

16. Zweimassendämpfungsschwungrad nach Anspruch 13, **dadurch gekennzeichnet , dass** die beiden zylindrischen Ringe (74, 76) der Reibmittel durch Finger oder elastische Segel (86) mit gewellter oder gewölbter Form miteinander verbunden sind, welche einstückig mit mindestens einem der Ringer (74, 76) ausgebildet sind.

17. Zweimassendämpfungsschwungrad nach einem der Ansprüche 1 bis 5, **dadurch gekennzeichnet, dass** die Reibungsmittel umfangsmäßig wirksame elastische Einspannmittel (104) umfassen.

18. Zweimassendämpfungsschwungrad nach Anspruch 17, **dadurch gekennzeichnet, dass** die elastischen Einspannmittel Umfangsfedern (104) umfassen, die in Ausnehmungen (106, 108) der einander gegenüberliegenden Oberflächen der beiden einander umgebend zwischen den Lagerringen (42, 44) montierten geschlitzten zylindrischen Ringe (100, 102) angeordnet sind, wobei diese Ausnehmungen an ihren Enden Auflageflächen auf den entsprechenden Enden der Federn (104) umfassen.

19. Zweimassendämpfungsschwungrad nach Anspruch 18, **dadurch gekennzeichnet, dass** es zwei vorgenannte Umfangsfedern (104) umfasst, die auf beiden Seiten der Schlitze der geschlitzten Ringe (100, 102) angeordnet sind.

20. Zweimassendämpfungsschwungrad nach einem der Ansprüche 1 bis 6, **dadurch gekennzeichnet, dass** die Reibungsmittel axial aufeinandergeschichtete flache Scheiben (88) umfassen, die abwechselnd drehfest mit dem einen und dem anderen des Außenrings (42) und Innenrings (44) des Lagers verbunden sind, und dass elastische Mittel (90) die Scheiben axial in Anlage aneinander beaufschlagen.

21. Zweimassendämpfungsschwungrad nach Anspruch 20, **dadurch gekennzeichnet, dass** die elastischen Mittel eine elastische Scheibe (90) in der Form einer Tellerfeder oder entsprechendem umfassen, die in Anlage auf einem ringförmigen Ring (92) des Endes von einem der Lagerringe und auf einer der vorgenannten flachen Scheiben (88) montiert ist.
